# EUROPEAN PATENT APPLICATION

(11) **EP 2 088 331 A1**
(43) Date of publication of application: **12.08.2009**
(21) Application number: 09152249.0
(22) Date of filing: 06.02.2009
(51) Int. Cl.: F15D 1/00, G01F 15/00

(54) **Fluid flow rectifying device and flow meter using the same**

(30) Priority: 08.02.2008 JP 2008028471
(71) Applicant: Yamatake Corporation, Tokyo 100-6419 (JP)
(72) Inventor: Inagaki, Hiroyuki c/o Yamatake Corporation, 100-6419 Tokyo (JP); Nikawa, Koichiro c/o Yamatake Corporation, 100-6419 Tokyo (JP); Hayashi, Tomohiko c/o Yamatake Corporation, 100-6419 Tokyo (JP)
(74) Representative: Colombo, Stefano Paolo

(57) **Abstract**

It is disclosed to provide a fluid flow rectifying device wherein the fluid flow rectifying device can be secured easily in the inlet of a flow path and wherein the flow path structure can be simplified and the fastening operation can be made more efficient. A fluid flow rectifying device for rectifying the flow of a fluid that flows in a flow path, and which can be built in to a flow path of a fluid, comprises a fluid flow rectifying device main unit that is structured from stacking a plurality of cylindrical spacer blocks and a plurality of mesh-shaped flow rectifying members, having external shapes that are essentially identical to the external shape of the spacer blocks; and a retaining ring having a retaining portion having an external shape that is essentially identical to the external shape of the fluid flow rectifying device main unit, and being bent so as to have an angle, from the vicinity of an attachment base, in the direction that is opposite of the direction of insertion of the fluid flow rectifying device main unit, and having a protrusion to the outside from the outer peripheral surface thereof, provided integrally with the end surface of the fluid flow rectifying device main unit that is on the side opposite from the direction of insertion into the flow path.

## Description

### TECHNICAL FIELD

The present invention relates to a fluid flow rectifying device that is built-in to measure a flow of a fluid, such as a gas, and to a flow meter using the same.

### BACKGROUND ART

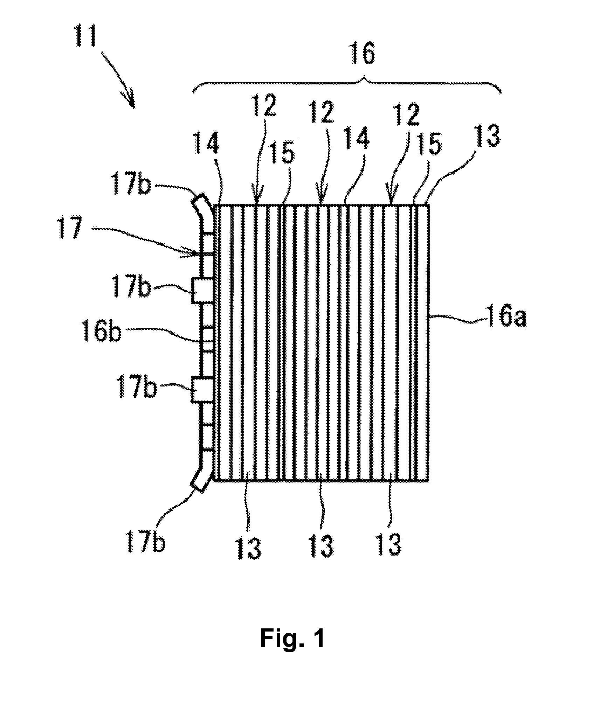

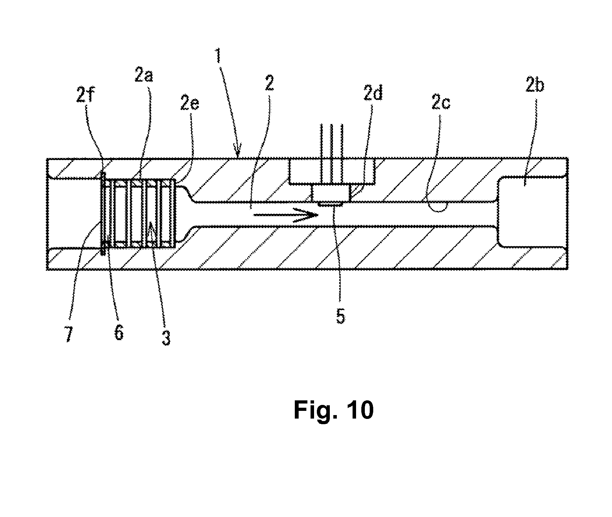

As a flow meter for measuring the flow of a fluid such as a gas, a flow meter has been proposed with a structure wherein an opening portion 2d is formed in a side wall surface 2c in the middle of a flow path 2 that is formed as a straight pipe from an inlet 2a to an outlet 2b for a fluid in a housing 1 such as illustrated schematically in the cross-sectional diagram in Fig. 10, where a fluid flow rectifying device 3 for rectifying the flow of the fluid to be measured, which flows in, is attached to the inlet 2a side, and a flow sensor 5 for measuring the flow of the fluid to be measured, indicated by the arrow, is provided in the opening portion 2d. (See, for example, Japanese Unexamined Patent Application Publication H11-132813 ("JP '813"), Page 3 and Fig. 1.)

With this fluid flow rectifying device 3, the front end surface is in contact with a step 2e of the inlet 2a of the flow path 2, and the back end surface is secured by a C-shape open retaining ring (C ring) 7 fitting into a ring-shaped groove 2f that is formed on the inside wall surface in the vicinity of the open end of the inlet 2a through a shock absorbing member (an elastic material) 6 such as an O-ring.

As the fluid flow rectifying device 3, a plurality of ring-shaped spacers that are formed with pairs of protruding portions and recessed portions, on both sides thereof, through a partial punching process on the plate material, made of a plate material of a specific thickness, and a plurality of layers of mesh-like fluid flow rectifying units, having external diameters that are essentially equal to those of the spacers are provided. A spacer block is formed by stacking together a specific number of the spacers with the protrusions and recessed portions fitting together, and spacer blocks and flow rectifying units are assembled alternatingly. Notch portions or hole portions are provided in the flow rectifying units at positions corresponding to the protrusions of the spacers, in a structure wherein the protrusions of the spacers are inserted into the notch portions or hole portions to assemble the spacer blocks. (See, for example, Japanese Unexamined Patent Application Publication 2005-24080 ("JP '080"), Pages 3 to 5 and Fig. 2.)

While there is that which is disclosed in JP '813 as a fluid flow rectifying device, when attaching the fluid flow rectifying device to the flow path of the flow meter, it is necessary to secure the fluid flow rectifying device on the inside of the flow path, and necessary for the fluid flow rectifying device to not rotate within the flow path.

Given this, a fastener has been proposed wherein, instead of the shock absorbing member (O-ring) 6 and the open retaining ring (C-ring) for attaching the fluid flow rectifying device 3 on the inside of the inlet 2a, a coil spring portion that is provided with the capability of elastic deformation in the axial direction, and an open retaining ring that fits in a groove that is provided in a ring shape on the inside wall surface in the vicinity of the open end of the inlet 2a, provided so as to be able to deform elastically in the radial direction, from a position of a diameter that is larger than that of coil spring portion, are provided continuously on one end of the coil spring portion. (See, for example, Japanese Unexamined Patent Application Publication 2006-105234 ("JP '234"), Page 4 and Fig. 1.)

Conversely, there has also been a structure proposed wherein the fluid flow rectifying device is secured through not only fitting a lock pawl, which is provided on the fluid flow rectifying device, into a hole that is provided in the flow path, but also providing a pressurizing spring at the other end, on the side that is opposite from a first end wherein the lock pawl is provided. (See, for example, Japanese Unexamined Patent Application Publication 2005-24352 ("JP '352"), Pages 5 to 6 and Fig. 1.)

However, in the invention set forth in JP '234 and the invention set forth in JP '352, it is necessary to provide a process for machining, in the inner peripheral surface of the flow path, a ring-shaped groove or a hole for securing, when machining the flow path of either of these flow meters, and hence there are problems in that the structures and the processes are complex from the perspective of simplicity of the flow path structure, and from the perspective of the process by which to manufacture the flow path structure.

Specifically, in the invention as set forth in JP '234, it is necessary to provide a process for providing a ring-shaped groove on the inside wall surface of the inlet of the flow path for securing the open retaining ring that has a diameter that is larger than that of the coil spring portion, provided continuous with one end of the coil spring portion.

Additionally, in the invention set forth in JP '352, a lock pawl at the outer periphery of a spacer that is positioned at the outside end portion is rotated so as to fit into a body lock groove, so the body in this case is formed with an undercut shape, and manufacturing through fabricating this shape requires additional processing, such as piercing with a slide from the outside or another machining process.

Moreover, in the invention as set forth in JP '352, a hole is opened in the outer periphery of the flow path, and so in order to prevent leakage of the fluid, the coupling that is the structure for attaching the flow path end portion to a position within the piping, is limited to, for example, a hose coupling.

### SUMMARY OF THE INVENTION

In order to solve the problems described above, the fluid flow rectifying device according to the present invention is built into a fluid flow path for rectifying the flow of the fluid that flows in the flow path, having a fluid flow rectifying device main unit formed by alternating layers of a plurality of cylindrical spacer blocks and a plurality of mesh-like fluid rectifying members having external shapes that are essentially the same as the external shapes of the spacer blocks; and a retaining ring, having an outer shape that is essentially the same as the outer shape of the flow rectifying device main unit and that has a retaining portion that protrudes to the outside from the outer peripheral surface and that is bent to have an angle, from the vicinity of the attachment base, in the direction that is opposite from the direction of the insertion into the flow path of the fluid flow rectifying device main unit, provided integrally with the end surface on the side that is opposite from the direction of insertion into the flow path of the fluid rectifying device main unit.

A fluid flow rectifying device wherein a plurality of spacer blocks and a plurality of flow rectifying members are stacked alternatingly, and wherein the retaining ring is provided integrally with the end surface on the side that is opposite from the direction of insertion of the flow rectifying device main unit into the flow path is attached to the flow path. That is, the fluid flow rectifying device main unit is inserted into the flow path, following which the retaining ring is pushed into the flow path. The retaining portion of the retaining ring is bent to have an angle, from the vicinity of the attachment base, in the direction that is opposite from the direction of the insertion into the flow path of the flow rectifying device main unit, so that when the retaining ring is pressed into the flow path, in accordance with the retaining ring being pressed in, there will be bending, from the vicinity of the base in a direction that is opposite from the direction of the insertion, to push against the inside wall surface of the flow path, preventing the possibility of falling out.

This makes it possible to secure easily the flow rectifying device main unit within the flow path. Additionally, the structure is simplified through the retaining ring being integrated with the flow rectifying device main unit, enabling improved manufacturability. Additionally, this can also reduce the number of parts. Furthermore, there is no need to form a ring-shaped groove in order to fit an open retaining ring into the inside wall surface of the flow path, as has been the case conventionally, simplifying the fabrication of the flow path.

The fluid flow rectifying device has a the retaining ring provided as a separate unit rather than integrally with the fluid flow rectifying device main unit.

Having the retaining ring be separate from the flow rectifying device main unit makes it possible to form the retaining ring from a separate material from the spacer block that forms the flow rectifying device main unit, making it possible to form the spacer block out of, for example, a synthetic resin, making it possible to achieve a cost reduction.

Additionally, the fluid flow rectifying device where the retaining ring has at least two retaining portions, where these retaining portions are provided at equal intervals along the peripheral direction.

The formation of two or more retaining portions, and the provision of the retaining portions at equal intervals along the peripheral direction, makes it possible to cause the way in which the force is applied to the inner wall surface of the flow path to be essentially uniform when the retaining portions of the retaining ring are pressed into the flow path and secured therein, making it possible to secure the flow rectifying device main unit with better balance.

The flow meter is provided with a housing, with in opening portion formed on an inner wall surface that extends from an inlet to an outlet of the flow path in the housing, wherein a sensor is provided within the opening portion, and a fluid flow rectifying device is provided for rectifying the flow of a fluid to be measured that flows in from the inlet side; wherein a fluid flow rectifying device is applied to this fluid flow rectifying device.

Using the fluid flow rectifying device in the flow meter eliminates the need for extra machining on the flow path, specifically to form a ring-shaped groove, or the like, for fitting the open retaining ring into the inside wall surface of the flow path, both simplifying the form of the flow path, and reducing the machining processes, enabling a reduction in costs.

The method for attaching a fluid flow rectifying device of a flow meter as set forth above, wherein:
the fluid flow rectifying device main unit of the fluid flow rectifying device is inserted into the inlet side of the flow path;
following which the retaining ring is pushed into the inlet to push the fluid flow rectifying device main unit to a specific position through pushing in the retaining ring while ending the retaining ring in the direction that is opposite of the direction of insertion of the flow rectifying device; and
pushing the retaining ring against an inner wall surface in the vicinity of the opening end of the inlet to secure the flow rectifying device main unit.

When attaching the fluid flow rectifying device, the main unit is inserted into the flow path, after which the retaining ring is pressed into the flow path. The retaining portion being bent so as to have an angle, from the attachment base, in the direction that is opposite of the direction of the insertion of the flow rectifying device main unit into the flow path makes it impossible to fall out because, when the retaining ring is pushed into the flow path, a bend is produced, from the vicinity of the attachment base, in the direction opposite of the direction of the insertion, commensurate with the pushing, pushing against the inside wall of the flow path. The retaining portion being bent to have an angle, from the vicinity of the attachment base in the direction opposite of the direction of the insertion of the flow rectifying device main unit makes it easy to press into the flow path. This makes it possible to secure the retaining ring easily within the inlet of the flow path so as to not come out, enabling the flow rectifying device main unit to be secured within the flow path.

Given the present invention, a flow rectifying device main unit that is structured by stacking a plurality of spacer blocks and a plurality of flow rectifying members alternatingly is inserted into the flow path, and a retaining ring is pushed into the flow path to bend a retaining portion in the direction that is opposite from the direction of the insertion of the flow rectifying device main unit into the flow path, to push against the inside wall surface of the flow path, making it possible to thereby secure the fluid flow rectifying device easily within the flow path, and enabling a simplification of the flow path structure and enabling an improvement in the efficiency of the attaching the operations. Additionally, fabricating the flow rectifying device main unit integrally with the retaining ring enables the manufacturing of the fluid flow rectifying device with a simple structure.

### BRIEF DESCRIPTION OF THE DRAWINGS

- Fig. 1 is a side view of a fluid flow rectifying device as set forth in the present invention.
- Fig. 2 illustrates a spacer that is structured from the spacer blocks of the fluid flow rectifying device illustrated in Fig. 1, where (a) is a plan view, and (b) is a cross-sectional diagram of (a).
- Fig. 3 is a plan view of a flow rectifying member for forming the fluid flow rectifying device illustrated in Fig. 1.
- Fig. 4 is a plan view of a flow rectifying member for forming the fluid flow rectifying device illustrated in Fig. 1.
- Fig. 5 illustrates a retaining ring for securing, in the flow path, the flow rectifying device main unit of the fluid flow rectifying device illustrated in Fig. 1, where (a) is a plan view, and (b) is a cross-sectional view of (a).
- Fig. 6 is an explanatory diagram illustrating the procedure for assembling the fluid flow rectifying device illustrated in Fig. 1.
- Fig. 7 is a cross-sectional diagram of a flow meter to which is applied the fluid flow rectifying device illustrated in Fig. 1.
- Fig. 8 is an explanatory diagram illustrating the procedure for inserting the fluid flow rectifying device into the inlet of the flow path of the flow meter illustrated in Fig. 7.
- Fig. 9 is an explanatory diagram of the state wherein a fluid flow rectifying device is pressed into the inlet of the flow path of the flow meter illustrated in Fig. 8.
- Fig. 10 is a cross-sectional diagram of a flow meter that uses a conventional fluid flow rectifying device.

### DETAILED DESCRIPTION OF PREFERRED EMBODIMENTS OF THE INVENTION

A fluid flow rectifying device according to an example of embodiment of the present invention will be explained below based on the figures. Fig. 1 illustrates a side view of a fluid flow rectifying device according to the present invention. The fluid flow rectifying device 11 is structured from a cylindrical flow rectifying device main unit 16 that is formed by stacking alternatingly a plurality of cylindrical spacer blocks 12 and a plurality of cylindrical rectifying members 14 and 15, and a retaining ring 17 that is secured integrally to the back end surface (the end surface on the left side in figure) 16b of the flow rectifying device main unit 16.

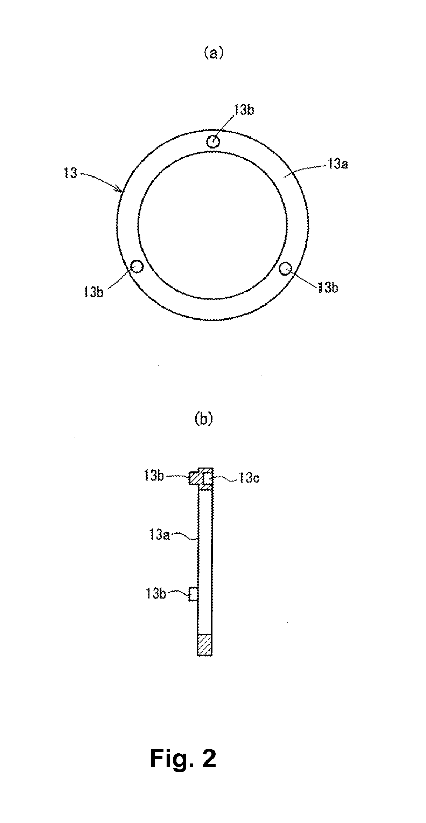

The spacer block is made from a plurality of spacers 13. A spacer 13 is produced as a ring shape component with a specific external diameter and internal diameter, as illustrated in Fig. 2 (a) by a pressing tool from, for example, a thin stainless steel plate (with a plate thickness of, for example, 0.5 mm) having corrosion resistance, as illustrated in Fig. 2. Pairs of raised portions 13b that protrude on one side surface (the front surface) and recessed portions 13c that are formed on the back side surface thereof (the back surface) are formed in a plurality, through a partial punching process, at equal intervals in the peripheral direction (that is, at equal angles relative to the center), formed at intervals of, for example, 120°, as illustrated in Fig. 2 (b) in the plate surface 13a of the spacer 13.

The spacer 13 has, for example, an external diameter of 11 mm, an internal diameter of 9 mm, with the raised portions 13b having an external diameter of 0.5 mm and a height of 0.3 mm, where the recessed portion 13c has an internal diameter of 0.5 mm and a depth of 0.3 mm. Note that in the partial punching process described above, the punch of the pressing tool does not penetrate to the steel plate, but rather stops in an intermediate position in a process that makes impressions.

Additionally, when the spacers 13 are stacked, the raised portion 13b of the second spacer fits into the recessed portion 13c of the first spacer, to be stacked with a tight fit. That is, the spacers 13 can be stacked to the required number of layers. Doing so makes it easy to set the spacer block 12 to a specific length.

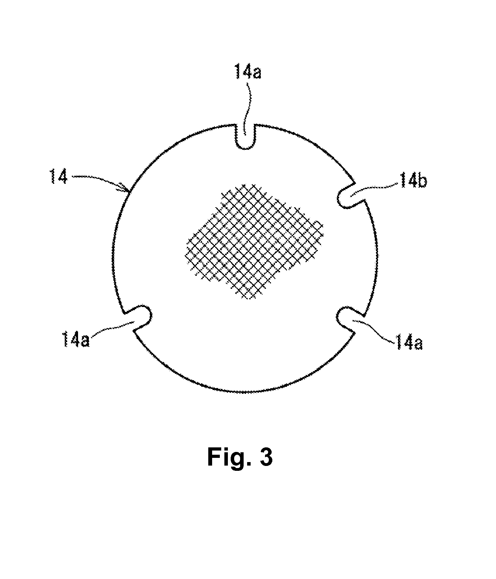

The fluid flow rectifying member 14, as illustrated in Fig. 3, is a steel mesh made from stainless steel wires with an external diameter that is essentially identical to that of the spacer 13 (11 mm), with a thickness that is less than that of the height of the raised portions 13b of the spacer 13 (0.3 mm), for example, between 0.05 mm and 0.2 mm. Additionally, essentially U-shaped notched portions 14a are formed, through which the raised portions 13b pass, at positions corresponding to each of the raised portions 13b of the spacers 13 at the peripheral edge portions thereof.

Furthermore, essentially U-shaped notched portions 14b, for identifying the orientation of the mesh openings, are formed in the peripheral edge portion of the flow rectifying member 14. The notched portion 14b is shaped identically to the notched portion 14a, and is provided in only a single location at, for example, a position that is in the center between the notched portion 14a at the upper portion in the figure, and the notched portion 14a at the lower right side. Note that these notched portions 14a and 14b have back end surfaces that form U shapes that are, of course, provided at positions that are towards the outside from the inner periphery of the spacer 13.

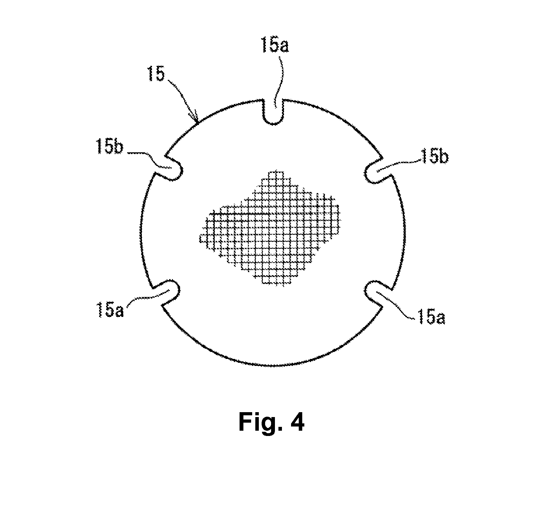

The flow rectifying member 15 is a steel mesh made from stainless steel wires, the same as the flow rectifying member 14, as illustrated in Fig. 4, with an external diameter and a thickness that are essentially the same as the diameter of the spacer 13 (at 11 mm) with the same thickness (between about 0.05 mm and 0.2 mm). Essentially U-shaped notched portions 15a through which the raised portions 13b penetrate are formed in positions corresponding to each of the raised portions 13b of the spacer 13 on the peripheral edge portion.

Furthermore, essentially U-shaped notched portions 15b, for identifying the orientation of the mesh openings, are formed in the peripheral edge portion of the flow rectifying member 15. Notched portions 15b are shaped identically to the notched portion 15a, and are provided in two locations at, for example, positions that are in the center between the notched portion 15a at the upper portion in the figure, and the notched portions 15a at the lower left and right sides. Note that these notched portions 15a and 15b have back end surfaces that form U shapes that are, of course, provided at positions that are towards the outside from the inner periphery of the spacer 13.

Additionally, in a state wherein the notched portions 14a and 15a are disposed at positions on the top side as illustrated in Fig. 3 and Fig. 4 (where, for example, this position is defined as the "reference orientation"), the mesh openings of the flow rectifying member 14 are oriented at a 45° angle, at an angle that is perpendicular to that of the mesh openings of the flow rectifying member 15. It is easy to identify the orientation of the mesh openings in the flow rectifying member 14 and 15 as being at the 45° angle or the perpendicular angle relative to the reference orientation depending on the number of the notched portions 14a, 14b, 15a, and 15b.

The notched portions 14a, 14b, 15a, and 15b of the flow rectifying members 14 and 15 are formed at intervals of 60° angles around the center along the peripheral direction, symmetrically on the front and the back, where the protruding portions 13b fit into the three corresponding notched portions 14a and 15a that form intervals of 120°, where the orientation of the mesh openings can be identified by the remaining notched portions 14b and 15b.

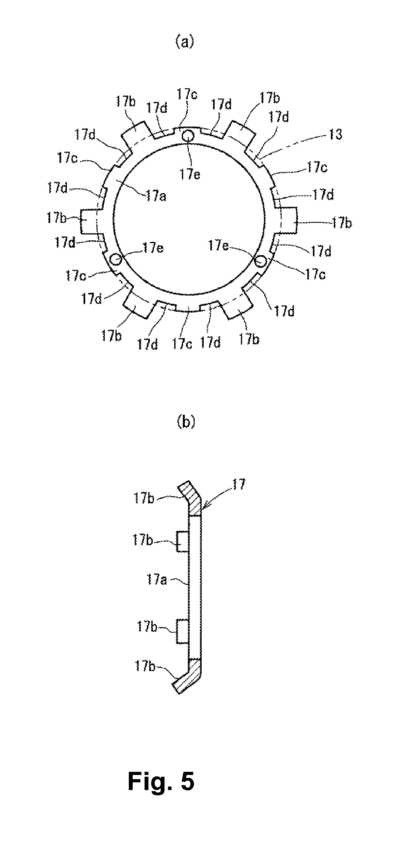

The retaining ring 17 has an outer diameter that is larger than the diameter of the spacer 13, indicated by the double dotted line, as illustrated in Fig. 5 (a), with an internal diameter that is identical to the internal diameter of the spacer 13. Additionally, the outer peripheral portion is divided into a plurality of equal portions having equal intervals in the peripheral direction (that is, equal angles relative to the center), divided into, for example, 24 equal portions, wherein large diameter portions 17b and medium diameter portions 17c are formed alternatingly with notched portions 17d interposed therebetween in a gear shape. Additionally, the large diameter portion 17b refers to a portion that is a retaining portion (hereinafter termed the "retaining portion 17b") that has a diameter that is larger than the outer diameter of the spacer 13, and the medium diameter portion 17c refers to a fastening portion (a layered portion) (hereinafter termed the "fastening portion 17c"), that has the same diameter as the outer diameter of the spacer 13.

Additionally, the notched portions 17d between the retaining portions 17b and the fastening portions 17c have a diameter that is less than that of the fastening portions 17c, where the outer diameter of the retaining portions 17b, as described below, serves as an escape portion that can flex to one side until essentially the same diameter as the outer diameter of the spacer 13. Additionally, the width of each of the retaining portions 17b is narrowed so as to enable flexing into essentially a circular arc shape along the outer periphery of the spacer 13, which forms a circle, as indicated by the double dotted line. Doing so enables each of the retaining portions 17b to flex so as to have the same outer diameter as the outer diameter of the spacer 13, or in other words, of the spacer block 12.

Consequently, in the present example of embodiment, the retaining portions 17b are formed in six locations at equal intervals in the peripheral direction, forming angles of 60° relative to the center, and the fastening portions 17c are formed in six locations at equal intervals are along the peripheral direction forming equal angles of 60° relative to the center, and the notched portions 17d, between the retaining portion 17b and the fastening portions 17c, are formed in 12 locations at equal intervals along the peripheral direction, forming equal angles of 30° relative to the center.

Additionally, holes 17e corresponding to each of the raised portions 13b of the spacer 13 are formed in the plate surface 17a of the retaining ring 17 at one location in each of the fastening portions 17c (each 120°) of the medium diameter portion 17c at six locations, and the raised portions 13b fit therein. Additionally, as illustrated in Fig. 5 (b) each of the retaining portions 17b are inclined so as to form a specific angle in the backwards correction (in the direction opposite of the direction of the insertion of the flow rectifying device main unit 16 into the flow path) from the base portion of the attachment with the notched portion 17d. The retaining ring 17 is formed integrally, through punching, using a pressing tool, a stainless steel disk with the same plate thickness as that of the spacer 13.

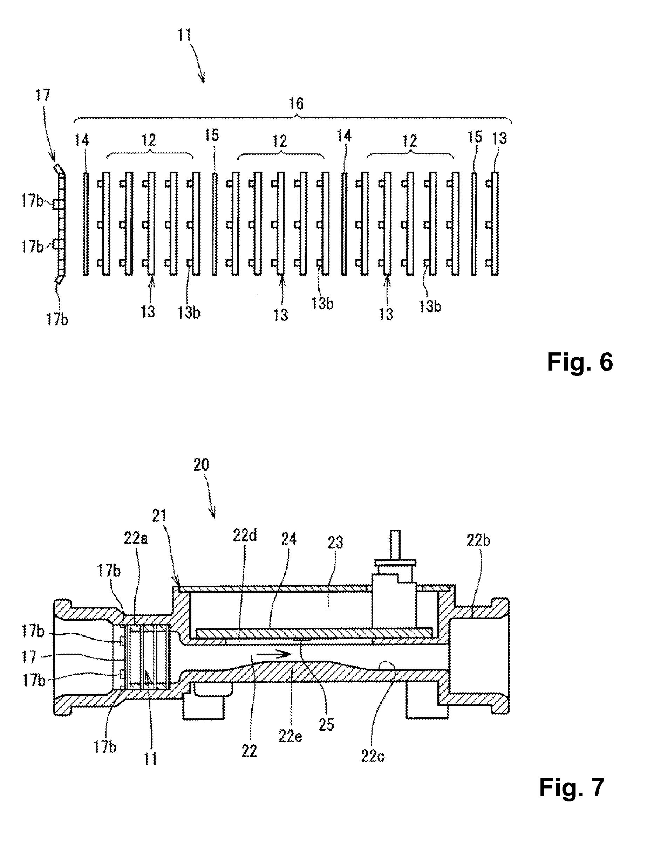

In the fluid flow rectifying device 11, a spacer block 12 is formed by stacking a plurality, for example, 5, spacers 13, as illustrated in Fig. 6, and, for example, three of these spacer blocks 12 are formed. Additionally, the flow rectifying member 14 is attached to the back end surface of the spacer block 12 on the left side in the figure (the back side), and is secured to the back end surface of the spacer block 12 by the retaining ring 17. A flow rectifying member 15 is stacked interposed between the left side (the back side) spacer block 12 and the center spacer block 12, and a fluid rectifying member 14 is stacked interposed between the center spacer block 12 and the right side (the front side) spacer block 12, where the flow rectifying member 15 is secured by the spacer 13 to the front end surface of the right side (the front side) spacer block 12.

That is, the retaining ring 17, the flow rectifying member 14, the spacer block 12, the flow rectifying member 15, the spacer block 12, the flow rectifying member 14, the spacer block 12, the flow rectifying member 15, and the spacer 13 are stacked alternatingly, and the holes 17e of the retaining ring 17 corresponding to the raised portions 13b of each of the spacers 13, and the raised portions 13b of the spacers 13 fit together. The thicknesses of the flow rectifying members 14 and 15 are thinner than the height of the raised portions 13b of the spacer 13 (0.3 mm) at between 0.05 mm and 0.2 mm), enabling the raised portions 13a of the spacers 13 to fit adequately into the recessed portions 13c of the corresponding spacers 13 by passing through the notched portions 14a and 15a of the flow rectifying members 14 and 15.

Additionally, the retaining rings 17 on both ends and the spacers 13 are put under pressure in the axial direction and each of the fitting portions are crimped to integrate and secure. If it is in this way that the fluid flow rectifying device 11 illustrated in Fig. 1 is formed. The disposal of the flow rectifying member 15 and the flow rectifying member 14 having mutually differing directions of in their mesh openings, being disposed alternatingly enables better flow rectification to be performed.

Fig. 7 is a cross-sectional diagram illustrating one example of a flow meter to which is applied the fluid flow rectifying device 11 illustrated in Fig. 1. In the flow meter 20, a cylindrical flow path 22 is formed as a straight pipe from a fluid inlet 22a to an outlet 22b at the lower portion of a box-shaped housing 21, and a long opening portion 22d is formed along the lengthwise direction (the direction of flow of the fluid) in the middle of an inside wall surface 22c. Additionally, the fluid flow rectifying device 11 for rectifying the flow of the fluid to be measured, which flows in through the inlet 22a, is provided, and a circuit board 24 is attached so as to cover tightly the opening portion 22d on the outside (the top side) of the flow path 22 in a box-shaped housing portion 23 at the top portion of the housing 21.

The inlet 22a has a size wherein the flow rectifying device main unit 16 of the fluid flow rectifying device 11 can be inserted with a small clearance. Furthermore, the length (depth) of the inlet 22a is formed so as to be slightly longer than the length of the fluid flow rectifying device 11.

A flow sensor 25 is provided on this circuit board 24 so as to be positioned within the opening portion 22d and so that the detecting surface is positioned further to the outside than the cylindrical inside wall surface 22c of the flow path 22. The inside wall surface 22c facing the opening portion 22d of the flow path 22 is a raised portion 22e in essentially a trapezoidal shape, built up facing essentially towards the center of the flow path 22. That is, the raised portion 22e is built up to a position that is essentially in the vicinity of the center of the flow path 22, with an essentially tapered upward incline facing towards the central direction from the beginning end position of the opening portion 22d, and, in essentially the central position of the opening portion 22d, is parallel along the lengthwise direction, and then again forming an incline that is essentially tapered in the downward direction so as to be coincident with the inner wall surface 22c at the position of the end of the opening portion 22d, to form essentially a trapezoidal shape. Thus, the inner surfaces can form a Venturi tube. Additionally, the flow sensor 25 faces the flat central portion of the raised portion 22e.

By having the upper portion of the inside wall surface that faces the opening portion 22d be a flat essentially trapezoidal shape in this way, the laminar flow of the fluid to be measured, indicated by the arrow, in the opening portion 22d is maintained from the upstream side through to the downstream side, with the result that it is possible to obtain a stabilized flow speed distribution at the flow sensor 25 of the flow meter, where the flow sensor 25 can measure the amount of flow accurately, with an output that is stable up to the high flow volume range.

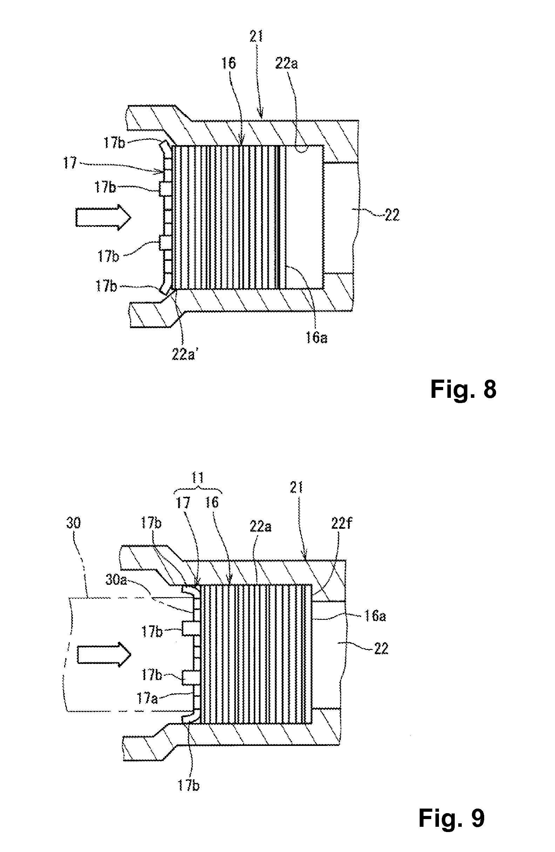

A procedure for attaching the fluid flow rectifying device 11 to the inlet 22a of the flow path 22 of the flow meter 20 will be explained next. First, as illustrated in Fig. 8, the flow rectifying device main unit 16 of the fluid flow rectifying device 11 is inserted into the inlet 22a until each of the retaining portions 17b of the retaining ring 17 strike the opening end 22a' of the inlet 22a, from the front end surface 16a. Each of the retaining portions 17b of the retaining ring 17 interlock concentrically with the opening end 22a', as illustrated, and is angled towards the back.

Next the tool illustrated by the double dotted in Fig. 9 is pressed against the plate surface 17a (shown in Fig. 4) so as to cause the front end surface 30a of an inserting rod 30 to form the ring shape of the retaining ring 17, to press into the inlet 22a as shown by the arrow. As a result, each of the retaining portions 17b of the retaining ring 17 are bent, by the opening end 22a' of the inlet 22a, in the direction that is opposite of the direction of force, or in other words, so as to have an angle towards the back, from the vicinity of the attachment base, so that a portion of the outside surface thereof, and the tip end portion, will be pressed against the inside wall surface in the vicinity of the opening end 22a' of the inlet 22a. The flow rectifying device main unit 16 is pressed in until the front end surface 16a thereof contacts the step 22f formed by the inlet 22a and the flow path 22.

The retaining portions 17b being inclined in the direction opposite from the direction of pushing when pushed into the inlet 22a, or in other words, being inclined in the backward direction (as illustrated in Fig. 4 (b) and Fig. 9) makes it easier to push in, enabling [the flow rectifying device main unit 16] to be pushed smoothly into the inlet 22a. Additionally, the retaining portions 17b, as illustrated in Fig. 4 (a), being formed at equal intervals along the peripheral direction, as illustrated in Fig. 4 (a), and in a plurality of locations (6 locations), causes the way in which the force is applied to the inside wall surface of the inlet 22a, when the retaining portions 17b are pressed into the inlet 22a, to have excellent balance in the peripheral direction. The result is that it is possible to secure the flow rectifying device main unit 16 with excellent balance within the inlet 22a.

Additionally, the retaining portions 17b are pressed against the inside wall surface in the vicinity of the opening end 22a' of the inlet 22a, and the tip end portion can bite into the inside wall surface, so as to fulfill the role of a stopper, preventing the flow rectifying device main unit 16 from rotating or from coming out. This enables the flow rectifying device main unit 16 to be installed within the inlet 22a with extreme simplicity and without the possibility of coming out. Moreover, there is no need to create a groove or a hole, or the like, in order to secure the retaining portions 17b at the inside wall surface in the vicinity of the opening end 22a' of the inlet 22a.

Consequently, not only is the structure of the inlet 22a of the flow path for installing the fluid flow rectifying device 11 extremely simple, but also the assembly operations are simplified, to achieve improved productivity. Furthermore, because there is no need for holes for securing the retaining portions 17b, there is no constraint on the shape of the coupling, as there is in the invention set forth in JP '352. Additionally, there is no danger of leakage of the fluid to the outside, preventing a negative effect on the accuracy of the flow meter.

Note that the housing 21 of the flow meter 20 in the example of embodiment set forth above may be structured through the provision of a trapezoidal raised portion 22e on the inside wall surface 22c corresponding to the opening portion 22d, with the opening portion 22d that is long along the direction of flow of the fluid provided on the inside wall surface 22c of the flow path 22, to accommodate the flow sensor 25 in a central position therein. However, there is no limitation to a housing that is structured in this way, but rather, of course, may be a structure as illustrated in Fig. 10 wherein the flow path 2 forms a straight pipe from the fluid inlet 2a to the outlet 2b, applied to a housing that is structured by forming an opening portion 2d that accommodates a flow sensor 5 in the inside wall surface 2c in the middle thereof.

Note that the retaining ring 17 may be provided in a plurality thereof, with the size of retaining portions 17b (that is, the width and length of the surface that contacts the inside wall surface of the inlet 22a) based on the force of friction that is required in order to secure the flow rectifying device main unit 16 within the inlet 22a of the flow path 22. Additionally, there is the requirement that there be at least one retaining portion 17b of the retaining ring 17, and preferably there are two or more, where the disposition is at equal angles relative to the center of the retaining ring 17 (that is, at equal intervals along the peripheral direction) in order to maintain a balance in the way in which the force is applied to the inside wall surface of the inlet 22a.

Additionally, the retaining ring 17 need not necessarily be secured to and integrated with the spacer 13 of the spacer block 12, but rather may be a separate unit from the flow rectifying device main unit 16 that comprises the stacked structure of the plurality of spacer blocks 12 and flow rectifying members 14 and 15. Preferably, the retaining ring 17 is a separate unit from the flow rectifying device main unit 16 to enable the application to a flow meter of a conventional structure, as illustrated in Fig. 10, eliminating the ring-shaped groove for fitting with the open retaining ring (C ring) 7 on the inside wall surface of the inlet of the flow path into which the fluid flow rectifying device is inserted, enabling a simplification of the machining process and enabling a reduction in costs.

While in the form of embodiment set forth above the explanation was for a case wherein the spacer 13 was formed through press forming of a thin plate of stainless steel, and a specific number of these spacers 13 were stacked together to form a spacer block 12 of a specific length (height), the present invention is not limited thereto. That is, instead a spacer block of a specific length (height) may be fabricated from a synthetic resin material, such as plastic, or the like, instead of the thin stainless steel plate, and, as with the case of the spacer 13, raised portions on one side end surface may be formed integrally, paired with recessed portions on the back side, and a plurality of these spacer blocks may be stacked alternatingly with flow rectifying members, having a plurality of mesh holes (steel mesh), to form the main unit of the flow rectifying unit.

In this case, the retaining ring 17 may use the thin stainless steel plate as illustrated in Fig. 4, described above, and, as a separate unit from the main unit portion wherein a plurality of spacer blocks and a plurality of fluid at rectifying members of the fluid flow rectifying device, is pressed against the opening end of the inlet, as described above, after the insertion of the main unit portion into the inlet of the flow path. Forming the spacer block from a synthetic resin material, such as plastic, in this way, achieves a large reduction in cost and also a reduction in weight. Here it is possible to integrate the retaining ring and the flow rectifying device main unit even when the spacer block is fabricated from the synthetic resin material.

Additionally, while the fluid flow rectifying device 11 was of there a cylindrical shape in the form of embodiment set forth above, the present invention is not limited thereto, but rather may be formed in the shape of a square tube with a square cross-sectional shape, matching the shape of the flow path, when, for example, the cross-sectional shape of the flow path is a square shape. In this case, the retaining ring also is formed in a square shape, and the retaining portions are formed in the center positions of each of the edges. Doing so enables the disposition of the retaining portions to be at equal intervals along the peripheral direction, forming equal angles (90°) relative to the center of the retaining ring.

Given the invention as described above, a fluid rectifying device main unit that is structured by stacking a plurality of spacer blocks and a plurality of fluid rectifying members alternatingly can be inserted into the flow path, and the retaining ring being pressed into the flow path to cause the retaining portions to press against the inside wall surface of the flow path by being bent in the direction opposite of the direction of the insertion of the flow rectifying device main unit into the flow path enables the flow path rectifying device to be secured easily in the flow path. Moreover, the integration of the flow rectifying device main unit with the retaining ring simplifies the structure and achieves an improvement in productivity, and can also achieve a reduction in the number of parts. Furthermore, this eliminates the need to form a ring-shaped groove on the inside wall surface of the flow path for fitting with the open retaining ring, as has been required conventionally, simplifying the fabrication of the flow path.

Additionally, having the retaining ring be a separate unit from the flow rectifying device main unit enables the fabrication of the spacer blocks that structure the flow rectifying device main unit from a material that is different from the retaining ring, enabling, for example, the fabrication of the spacer block from a synthetic resin, enabling a reduction in costs.

Additionally, the formation of two or more retaining portions and the provision of the retaining portions at equal intervals along the peripheral direction enables the way with which the force is applied to the inside wall surfaces of the flow path to be balanced when the retaining portions of the retaining ring are secured through being pushed into the inside wall surface of the flow path, enabling the flow rectifying device main unit to be secured with good balance.

Furthermore, the application of the fluid flow rectifying device as set forth above as the flow meter eliminates the need for extra machining of the fluid flow, and particularly, eliminates the need for the formation of a ring-shaped groove on the inside wall surface of the flow path for fitting with an open retaining ring, not only simplifying the formation of the flow path, but also reducing the machining processes, thereby achieving a reduction in cost.

Moreover, when assembling the fluid flow rectifying device, the flow rectifying device main unit is inserted into the flow path, after which the retaining ring is pressed into the flow path. Having the retaining portions of the retaining ring be bent so as to have an angle from the vicinity of the attachment base in the direction that is opposite from the direction of the insertion of the flow rectifying device main unit into the flow path causes a bend in the vicinity of the attachment base in the direction that is opposite from the direction of insertion, when being pressed into the flow path, in accordance with the pressing in of the retaining ring, to cause a force to be applied against the inside wall surface of the flow path, preventing the flow rectifying device main unit from being able to come out. The retaining portion being bent so as to have an angle from the vicinity of the attachment base in the direction that is opposite of the direction of the insertion of the flow rectifying device main unit enables the flow rectifying device main unit to be pressed into the flow path easily. This makes it possible to secure the retaining ring easily within the inlet of the flow path so as to not be able to come out, enabling the flow rectifying device main unit to be secured within the flow path.

## Claims

1. A fluid flow rectifying device (11), built into a fluid flow path (22), for rectifying the flow of the fluid that flows in the flow path (22), comprising:
a fluid flow rectifying device main unit (16) comprising:
alternating layers of a plurality of cylindrical spacer blocks (12); and a plurality of mesh-like fluid rectifying members (14, 15) having external shapes that are essentially the same as the external shapes of the spacer blocks (12); and
a retaining ring (17), having an outer shape that is essentially the same as the outer shape of the flow rectifying device main unit (16) and that has a retaining portion (17b) that protrudes to the outside from the outer peripheral surface and that is bent to have an angle, from the vicinity of the attachment base, in the direction that is opposite from the direction of the insertion into the flow path (22) of the fluid flow rectifying device main unit (16), provided integrally with the end surface (16b) on the side that is opposite from the direction of insertion into the flow path (22) of the fluid rectifying device main unit (16).

2. The fluid flow rectifying device (11) according Claim 1, wherein the retaining ring (17) is provided as a separate unit from the fluid flow rectifying device main unit (16).

3. The fluid flow rectifying device (11) according to Claim 1, wherein the retaining ring (17) has at least two retaining portions (17b), wherein the retaining portions (17b) are provided at equal intervals along the peripheral direction.

4. The fluid flow rectifying device (11) according to Claim 1, further comprising a flow meter (20) provided with a housing (21), with an opening portion (22d) formed on an inner wall surface (22c) that extends from an inlet (22a) to an outlet (22b) of the flow path (22) in the housing (21), wherein a sensor (25) is provided within the opening portion (22d), wherein the rectifying device (11) is provided for rectifying the flow of a fluid to be measured that flows in from the inlet side.

5. A method for attaching a fluid flow rectifying device (11) of a flow meter (20) comprising the steps of:
- inserting the fluid flow rectifying device main unit (16) of the fluid flow rectifying device (11) into the inlet side of the flow path (22);
- following which the retaining ring (17) is pushed into the inlet (22a) to push the fluid flow rectifying device main unit (16) to a specific position through pushing in the retaining ring (17);
- ending the retaining ring (17) in the direction that is opposite of the direction of insertion of the flow rectifying device (11); and
- pushing the retaining ring (17) against an inner wall surface (22c) in the vicinity of the opening end of the inlet (22a) to secure the flow rectifying device main unit (16).
